# EUROPÄISCHE PATENTSCHRIFT

(11) **EP 0 812 739 B1**
(45) Veröffentlichungstag und Bekanntmachung des Hinweises auf die Patenterteilung: **30.01.2008**
(21) Anmeldenummer: 97107628.6
(22) Anmeldetag: 09.05.1997
(51) Int. Cl.: B60R 21/213, B60J 5/04

(54) **Airbageinrichtung**
Airbag
Coussin de sécurité gonflable

(30) Priorität: 14.06.1996 DE 19623875
(43) Veröffentlichungstag der Anmeldung: 17.12.1997
(73) Patentinhaber: Volkswagen Aktiengesellschaft, 38436 Wolfsburg (DE)
(72) Erfinder: Sinnhuber, Ruprecht, Dipl.-Ing., 38518 Gifhorn (DE)

(56) Entgegenhaltungen:
- EP-A- 0 619 204
- EP-A- 0 705 738
- DE-A- 19 512 332
- GB-A- 2 261 636

## Beschreibung

Die Erfindung betrifft ein Fahrzeug mit einer Airbageinrichtung gemäß dem Oberbegriff des Patentanspruchs 1.

Gemäß den gattungsbildenden Offenlegungsschriften DE 44 26 848 A1 und EP 0 694 444 A2 wird zur Befestigung der Airbagvorrichtung eine Klemmvorrichtung nach Art eines Keders vorgeschlagen, die auf ein Halteblech aufgesteckt wird. Zur Lagefixierung des gefalteten Gaskissens werden Hüllen vorgeschlagen, die ebenfalls an der Klemmvorrichtung befestigt sind. Vom Gaserzeuger wird das Gas zum Diffusor/Airbag über eine Gasführung geleitet, die im Kedar angeordnet ist.

Weitere Airbageinrichtungen sind in einer großen Vielzahl von Ausführungsformen bekannt geworden. Diesbezüglich wird beispielsweise auf die Schriften DE 43 04 919 A1 und DE 43 07 175 A1 sowie die GB 2 191 450, DE 42 38 427 A1 und US 5,322,322 verwiesen. Sämtlichen Schriften kann in schematischen Darstellungen entnommen werden, daß unterhalb von Innenverkleidungsteilen wenigstens ein durch einen Gasgenerator aufblasbares Gaskissen angeordnet ist. Es finden sich jedoch keinerlei Hinweise auf die konkrete Ausgestaltung des Innenverkleidungsteils, insbesondere im Hinblick auf die Befestigung an Rahmenteilen des Fahrzeugs.

Zur Abrundung des Standes der Technik wird schließlich noch auf die EP 0 619 204 A2 hingewiesen. Diese offenbart einen Trägerkörper für eine Airbageinrichtung, an dem auch als Abdeckkappe ein Verkleidungselement befestigt ist.

Der Erfindung liegt die Aufgabe zugrunde, für ein Fahrzeug mit einer gattungsgemäßen Airbageinrichtung eine montagefreundliche Lösung bereitzustellen.

Diese Aufgabe wird gelöst mit einem Fahrzeug mit einer Airbageinrichtung gemäß den Merkmalen des Patentanspruchs 1. Die Unteransprüche betreffen besonders zweckmäßige Weiterbildungen.

Erfindungsgemäß wird ein Fahrzeug mit einer Airbageinrichtung für Insassen des Fahrzeugs vorgeschlagen, mit wenigstens einem durch wenigstens einen Gasgenerator aufblasbaren Gaskissen, das unter einem Wandelement eines Verkleidungsteils angeordnet ist, wobei das Gaskissen im zusammengefalteten Zustand direkt oder über Anbindung an den Gasgenerator mittelbar an dem Wandelement befestigt ist und das als Formkörper ausgebildete Verkleidungselement einerseits und zumindest das wenigstens eine Gaskissen andererseits ein Vormontagemodul bilden, wobei das Vormontagemodul mit Arretiermitteln zur Befestigung am Fahrzeugaufbau und/oder an anderen Verkleidungsteilen versehen ist und wobei dem Wandelement und/oder dem Gaskissen ein Fluid- oder Treibmittelleitungsanschluss zugeordnet ist, der mit einer durch den Gasgenerator füllbaren Zufuhrleitung verbunden ist, wobei weiterhin die Zufuhrleitung zumindest abschnittsweise integraler Bestandteil des Wandelementes ist.

Im zusammengefalteten Zustand ist das Gaskissen also dem als Formkörper ausgebildeten Verkleidungsteil selbst zugeordnet und bildet mit diesem ein Vormontagemodul. Weiterhin sind an dem Verkleidungsteil selbst Arretiermittel vorgesehen, durch die das Vormontagemodul an dem Fahrzeugaufbau und/oder an benachbarten Verkleidungsteilen festlegbar ist. Eine Abkopplung des aus Verkleidungsteil und Gaskissen gebildeten Moduls von dem Keder ist möglich. Dies ist insbesondere bei einer Unterbringung der Airbageinrichtung im Bereich eines Dachrahmens von Vorteil, weil der im Türbereich durch Tür- und Einstiegsbewegungen häufig schlag- und scheuerbeanspruchte Kederbereich von dem Innenverkleidungsteil entkoppelt werden kann. Das Verkleidungsteil muß also nicht mitarbeiten und verbleibt in optisch ansprechender Weise über die gesamte Lebensdauer hinweg nahezu beschädigungsfrei an seinem Montageplatz. Ergänzend oder alternativ kann das zum Verkleidungselement gehörende Wandelement als Führung des Gaskissens beim Aufblasvorgang dienen. Durch eine stabile Anlenkung - also durch Aufrechterhaltung einer definierten Kopplung zwischen Fahrzeugaufbau und Verkleidungselement - beispielsweise im Dachrahmenbereich kann eine gezielte Entfaltung entlang der Seitenscheibe und/oder vertikalen Säule erzeugt werden. Dies ist insbesondere dann von Vorteil, wenn bei einem Seitenaufprall der zu schützende Insasse sich in einer ungünstigen Position befindet.

Der Integrationsgrad für das Vormontagemodul wird dadurch erhöht, daß sowohl Treibmittelleitungsanschlüsse für das Gaskissen als auch Bestandteile der Treibmittelzufuhrleitung auf einer für den Fahrzeuginsassen nicht sichtbaren Rückseite des Verkleidungsteils befestigt sind. Aus Spritzkunststoff hergestellte Verkleidungsteile können darüber hinaus eingeformte Kanäle aufweisen, die Bestandteile des Treibmittelzufuhrsystems sind. Ein besonderer Vorteil der Erfindungsvarianten ist darin zu sehen, daß sie auch als Nachrüstlösung für bereits in Serie befindliche Fahrzeuge vorgesehen werden können. Konventionelle Verkleidungsteile können ohne großen Aufwand abgebaut werden und durch erfindungsgemäß erweiterte Verkleidungsteile ersetzt werden. Auch der Anschluß an anderweitig, also außerhalb des vom Verkleidungsteil bedeckten Hohlraums untergebrachte Gasgeneratoren, z. B. in Hohlräumen von Säulen, horizontal verlaufenden Profilelementen oder in Türen kann mit geringem Aufwand vorgenommen werden, weil die relativ schmal ausführbare Treibmittelzufuhrleitung (im Durchmesser zwischen 5 und 20 mm) problemlos verlegt werden kann.

Bei einem weiteren vorteilhaften Ausführungsbeispiel ist der Gasgenerator ebenfalls in Rastvorrichtungen auf der Rückseite des Verkleidungsteils arretierbar. Vorstellbar ist auch die Verteilung mehrerer kleiner Gasgeneratoren auf der Rückseite der Verkleidungsteile. Diesen können ggf. einzelne kleinere Gaskissen zugeordnet sein oder alle gemeinsam mit einem großen Gaskissen in Verbindung stehen. Bei einer derartigen Verteilung mehrerer Gasgeneratoren kann beispielsweise ein Leitungs- bzw. Kabelbaumsystem für die Signalleitungen vorgesehen werden, das entweder integraler Bestandteil des Verkleidungselementes ist oder an direkt angeformten Rastnasen anclipsbar ist. Denkbar ist jedoch auch die Einformung elektrischer Steckkontakte, die gleichzeitig auch der mechanischen Gesamtarretierung der einzelnen Gasgeneratoren dienen. Durch diese Maßnahme wird der Integrationsgrad des Vormontagemoduls weiter erhöht.

Weiter als Vorteil zu nennen ist die Tatsache, daß gerade bei großflächigen Verkleidungsteilen nur wenige Faltungen für eine geordnete Unterbringung des Gaskissens notwendig sind. Durch diese Art der Verpackung des Gaskissens kann letzteres schneller in eine Rückhalteposition aufgeblasen werden als Gaskissen mit Kompaktfaltung. Außerdem wird durch die weniger starken Entfaltungsbewegungen die Lärmbelastung der Insassen deutlich minimiert.

Von besonderer Bedeutung ist auch, daß sämtliche auf der Rückseite des Verkleidungselementes angeordneten Funktionselemente (Gaskissen, Gasgeneratoren, Führungs-, Stramm- und Fangbänder, Fluid- oder Treibmittelleitungen sowie deren Anschlüsse und elektrische Kontaktelemente) als Standardbauteile ausgeführt werden, die nach dem Baukastenprinzip an fahrzeugindividuell ausgeformten Verkleidungselementen befestigbar sind.

Hervorzuheben ist auch, daß mit der erfindungsgemäßen Airbageinrichtung sogenannte "Smart-Airbag-Konzepte" verwirklicht werden können. Beispielsweise durch gezieltes Anblasen des Gaskissens zunächst in kopfaufschlaggefährdeten Bereichen oder durch ein vorgegebenes Zeit- bzw. Treibladungsmanagement bei der Aktivierung mehrerer Einzelkissen kann ein Optimum an Schutzwirkung erreicht werden.

Insbesondere mit der zweiten Erfindungsvariante können besonders gute Resultate bezüglich des Insassenschutzes bei Seitenaufprallunfällen für den Kopf- und/oder Thoraxbereich erreicht werden. Durch gezielte Vorgabe der Öffnungsbewegung des Verkleidungselementes während der Gaskissenfüllung kann dafür gesorgt werden, daß die Gaskissenentfaltung sehr kontrolliert abläuft und damit beispielsweise auch Fahrzeuginsassen, die sich bei einer Kollision in einer ungünstigen Rückhalteposition befinden, zunächst in eine günstige Rückhalteposition hineingeschoben werden und anschließend einen wirksamen Aufprallschutz erhalten. Hierzu kann eine besondere Gaskissenfaltung vorgesehen sein.

Vorteilhafte Ausführungsbeispiele der Erfindung sind in der Zeichnung dargestellt. Es zeigt
- Figur 1:: einen Querschnitt durch ein Gehäuse, das eine Hohlkammer zur Aufnahme eines Gaskissens aufweist,
- Figur 2:: eine vergrößerte Ansicht zur Einzelheit II in Figur 1,
- Figur 3:: in schematisierter Darstellung ein Verkleidungselement, das im Sinne der Erfindung als Modulträger ausgebildet ist,
- Figur 4:: ein Verkleidungselement mit daran befestigtem Gaskissen zur Abdeckung einer Fahrzeugsäule,
- Figur 5:: ein mit einem Gaskissen ausgerüstetes Verkleidungselement mit einer Befestigung im Bereich eines Dachrahmens,
- Figur 6:: ein erfindungsgemäß ausgeführtes Verkleidungselement mit einem Gaskissen im Bereich einer Türbrüstung,
- Figur 7:: eine Airbaganordnung auf der Basis des in Figur 6 dargestellten Prinzips,
- Figur 8:: eine Ansicht gemäß Schnitt VIII - VIII in Figur 7.

Gleiche Bauteile weisen in allen Figuren die gleiche Bezifferung auf.

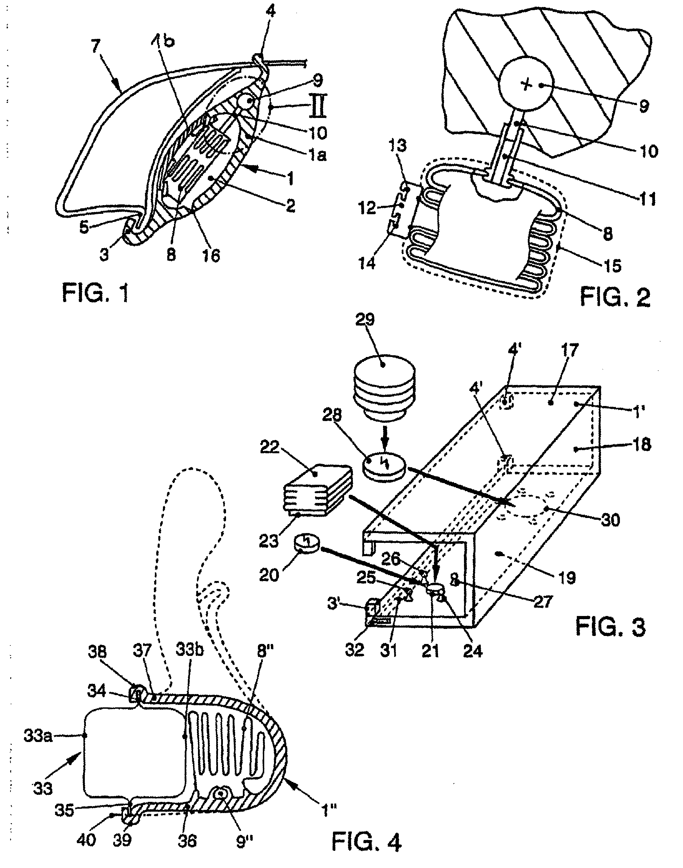

Man erkennt in Figur 1 als Verkleidungselement ein insgesamt mit 1 bezeichnetes Gehäuse, das im Inneren einen als Gaskissenaufnahmekammer ausgebildeten Hohlraum 2 und an seinen äußeren Kanten Clipsnasen 3 und 4 aufweist, die als Rastmittel an einem Flansch 5 bzw. in einer Ausnehmung 6 eines hier nur ausschnittsweise dargestellten Fahrzeugaufbaus 7 arretiert sind. In kinematischer Umkehr des vorstehend beschriebenen Prinzips können ebenso am Fahrzeugaufbau Stehbolzen (hier nicht dargestellt) vorgesehen sein, auf die das Gehäuse 1 aufgeclipst wird. Letzteres ist hier zweiteilig ausgeführt und umfaßt zum einen einen dem Fahrzeuginsassenraum zugewandte Dekorabschnitt 1a und einen ein Gaskissen 8 fixierenden Halteabschnitt 1 b auf. Weiter von Bedeutung ist ein in das Gehäuse 1 integrierter Leitungskanal 9, der über einen Abzweig 10 mit dem Gaskissen 8 verbunden ist (siehe auch Figur 2). An dem Gaskissen 8 ist ein Leitungsanschluß 11 eingebracht, der mit dem Abzweig 10 verbunden ist. Zur Fixierung des Gaskissens 8 an dem Halteteil 1b ist ein Klemmkörper 12 vorgesehen, der über Profilschlitze 13, 14 an Gegenprofilen (hier nicht dargestellt) auf dem Halteteil 1b befestigt ist. Mit einer dünnen Strichlinie ist eine das Gaskissen 8 umgebende Folie 15 angedeutet, welche im Hohlraum 2 den zusammengefalteten Zustand des Gaskissens 8 aufrechterhält. Die Folie ist dabei so schwach dimensioniert, daß sie beim Befüllen des Gaskissens 8 über den Abzweig 10 und den Anschluß 11 der aufblasbedingten Ausdehnung keinen spürbaren Widerstand entgegensetzt.

Für die Funktion der gesamten Airbag-Einrichtung von wesentlicher Bedeutung ist auch eine Sollbruchstelle 16 (siehe Figur 1), welche bei Ausdehnung des Gaskissens 8 aufreißt und so eine Entfaltung in eine abwärtsgerichteten Bewegung ermöglicht.

Die in Figur 1 im Querschnitt gezeigte Konfiguration kann so gewählt werden, daß innerhalb des Gehäuses 1 mehrere kleine Gaskissen nebeneinander angeordnet sind, die dann über ihnen jeweils zugewiesene Abzweige gesondert oder gemeinsam mit Fluiddruck beaufschlagt werden. Vorstellbar ist auch ein einteiliges Gaskissen in Gestalt eines Schlauches, der sich über einen längerer Abschnitt erstreckt. In hier nicht näher dargestellter Weise sind an Stirnseiten des Gehäuses 1 Anschlußstutzen vorgesehen, durch die der Leitungskanal 9 mit einer Fluid-Treibmittelzufuhr verbunden werden kann. Der oder die zugehörigen Gasgeneratoren sind also außerhalb des Gehäuses 1 angeordnet.

Ein demgegenüber verändertes Prinzip zeigt Figur 3. Dort ist das Verkleidungselement 1' nach Art eines Modulträgers gebildet, der auf seinen Außenseiten 17 bis 19 dekorierende Funktion hat und auf wenigstens einer der gegenüberliegenden Rückseiten Arretierfunktionen für Elemente der Airbag-Einrichtung übernimmt. So ist für ein erstes Montagekonzept ein Gasgenerator 20 vorgesehen, der auf einem Steckersockel 21 befestigbar ist. Der auf diese Weise an dem Wandelement 1' angeordnete Gasgenerator 20 wird von einem Gaskissen 22 überdeckt, das mittels eines Klemmfußes 23 an Profilkörpern 24 bis 27 (mögliche Ausführungsformen können sein: Befestigungszapfen, Profilschienen, eingespritzte Blechteile mit aufgesetztem Stehbolzen oder dergleichen) arretiert sind.

Bei einem zweiten Konzept werden zunächst ein Gasgenerator 28 und ein Gaskissen 29 zu einer Baueinheit zusammengefaßt, die dann auf einem in Strichlinien dargestellten Steckersockel 30 befestigt wird. Die Steckersockel 21 und 30 sind mit einem elektrischen Leitungssystem 31 verbunden, das an einen elektrischen Stecker 33 angeschlossen ist. Über diesen Stecker kann das Wandelement 1 mit der Fahrzeugelektronik verbunden werden, um so die von einem Crashsensor gelieferten Signale den Zündmechanismen in den Gasgeneratoren 20 bzw. 38 zuführen zu können.

Abweichend von dem in Figur 3 dargestellten Ausführungsbeispiel können elektrische Kabel oder Leitungssysteme jedoch auch an Clipsnasen arretiert werden, die an wenigstens einer der Rückseiten des Wandelementes 1' direkt angeformt sind. Nur der Vollständigkeit halber wird an dieser Stelle darauf hingewiesen, daß auch eine mit der Funktion des Leitungskanals 9 vergleichbare Leitung mittels Clipsverbindungen auf den Rückseiten arretiert werden kann.

Die Befestigung des gesamten in Figur 3 dargestellten Moduls am Fahrzeugaufbau erfolgt über hier ebenfalls nur schematisch angedeutete Arretiermittel 3' bzw. 4'.

Praktische Anwendungsfälle für die vorstehend beschriebenen Konzepte zeigen die Figuren 4 bis 8. So ist beispielsweise als typische Einbausituation im Bereich einer vertikalen Säule in Figur 4 eine B-Säule 33 dargestellt, die hier aus zwei Blechschalen 33a und 33b gebildet ist. Diese bilden Halteflansche 34 und 35, auf die das Wandelement 1'' aufgeclipst ist. Letzteres ist hier in einem Kunststoff-Spritzwerkzeug hergestellt worden und weist insbesondere im Bereich von Wangen 36 und 37 eine Elastizität auf, welche ein Aufstülpen von angeformten Klemmnuten 38 und 39 auf die Halteflansche 34 und 35 ermöglicht. Die Verbindung zwischen dem Halteflansch 35 und der Klemmnut 39 ist hier durch ein schematisch angedeutetes Befestigungsmittel 40 (beispielsweise eine Schraube) so stabil ausgeführt, daß bei einer durch den Leitungskanal 9'' erfolgenden Befüllung des Gaskissens 8'' in diesem Bereich der Verbund zwischen der B-Säule 33 und dem Gehäuse 1'' erhalten bleibt. Damit fungiert der Zusammenbau aus der Wange 36 und dem Halteflansch 35 als Schwenklager. Die Befüllung des Gaskissens 8 sorgt dafür, daß demgegenüber die Wange 37 nach außen abgestellt wird und so die Klemmnut 38 vom Halteflansch 34 entfernt wird. Das Gaskissen 8'' kann auf diese Weise dann gerichtet austreten.

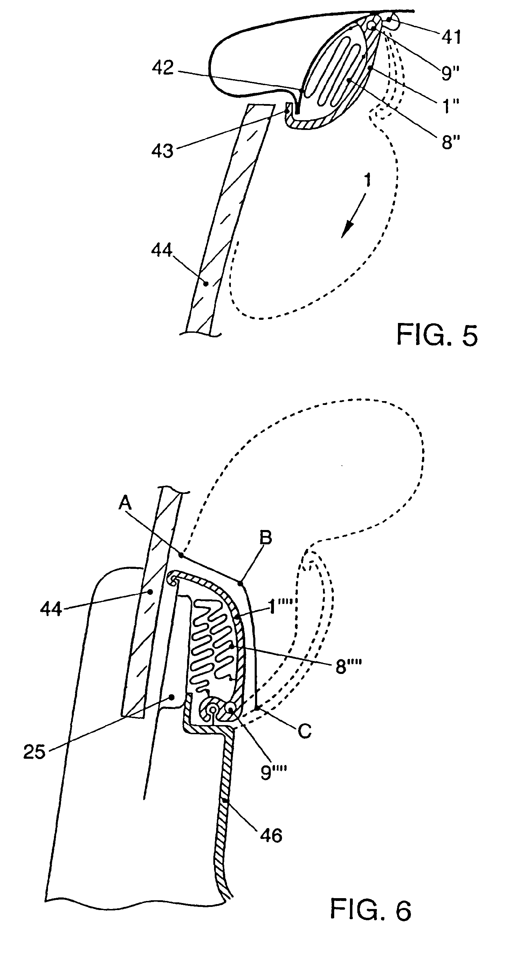

Figur 5 zeigt ein Wandelement 1''', das über ein Schwenklager 41 im Bereich eines Dachrahmens angeordnet ist und als lösbare Arretierung mittels einer über einen Halteflansch 42 greifenden Klemmnase 43 befestigt ist. Das Gaskissen 8''' wird nach Befüllung über den Leitungskanal 9''' neben einer schematisch angedeuteten Fensterscheibe 44 in die gestrichelt angedeutete Lage nach unten bewegt. Das Schwenklager 41 ist dabei so ausgebildet, daß das gesamte Wandelement 1''' entsprechend in Richtung Fahrzeuginneres ausweicht. Gemäß einer besonders vorteilhaften Ausführung ist das Wandelement 1''' auch als Energieabsorptionselement ausgebildet, so daß bei einem Sekundäraufprall beispielsweise der Kopf eines relativ groß gewachsenen Fahrzeuginsassen gegenüber Säulenteilen des Fahrzeuges wirkungsvoll auch dann noch aufgefangen werden kann, wenn der Gassack 8''' schon wieder weitgehend erschlafft ist. Zur Bereitstellung der Energieabsorptionsfunktion sind in einer vorteilhaften Ausführungsform (hier nicht dargestellt) an dem Wandelement kunststoffumspritzte Armierungen, beispielsweise Blechplatten, vorgesehen, die gleichzeitig auch zur arretierenden Aufnahme einzelner Elemente der Airbageinrichtung hergerichtet sein können.

Gleiches gilt auch für ein Wandelement 1'''', das einem Fensterschachtträger 45 zugeordnet ist. Zusammen mit einer Türverkleidung 46 wird eine optisch ansprechende Oberfläche gebildet, ohne daß für den Fahrzeuginsassen das Vorhandensein des Gaskissens 8'''' erkennbar ist. Abweichend von dem in Figur 6 dargestellten Ausführungsbeispiel kann beispielsweise ein in etwa von den Punkten A bis B reichender Bereich sehr nachgiebig ausgeführt und ggf. durch Fangbänder 45 a (hier gestrichelt angedeutet) in seiner maximalen Bewegbarkeit beschränkt sein, während ein von B bis C reichender Bereich so stabil ausgeführt ist, daß auch bei Entfaltung des Gaskissens 8'''' keine wesentliche Ortsveränderung auftritt. Auf diese Weise wird ein gezielter Schuß des Gaskissens 8'''' nach oben parallel zur Fensterscheibe 44 erreicht, so daß auch für Fahrzeuginsassen, die sich in einer ungünstigen Rückhalteposition befinden, gute Schutzwirkungen erzielt werden können. Die örtlich sehr schmale Ausdehnung zu Beginn des Ausblasvorganges sorgt dafür, daß ein beispielsweise an die Fensterscheibe 44 angelehnter Fahrzeuginsasse zunächst in Richtung des Fahrzeuginneren bewegt wird und anschließend nach vollständiger Entfaltung des Gaskissens 8'''' wirkungsvoll über die gesamte Breite der Fensterscheibe aufgefangen werden kann, wenn bei einem Seitenaufprall entweder ein stoßendes Fahrzeug oder ein pfahlartiger Gegenstand intrudierend auf die Fahrzeugkarosserie einwirkt. Die Abstützung des Fahrzeuginsassen an den relativ großflächigen Wandelementen 1' bis 1'''' sorgt dafür, daß die vom Insassen auf das Gaskissen ausgeübten Kräfte ebenfalls großflächig verteilt werden. Die Gefahr des Durchschlagens des Fahrzeuginsassen wird also deutlich gemindert.

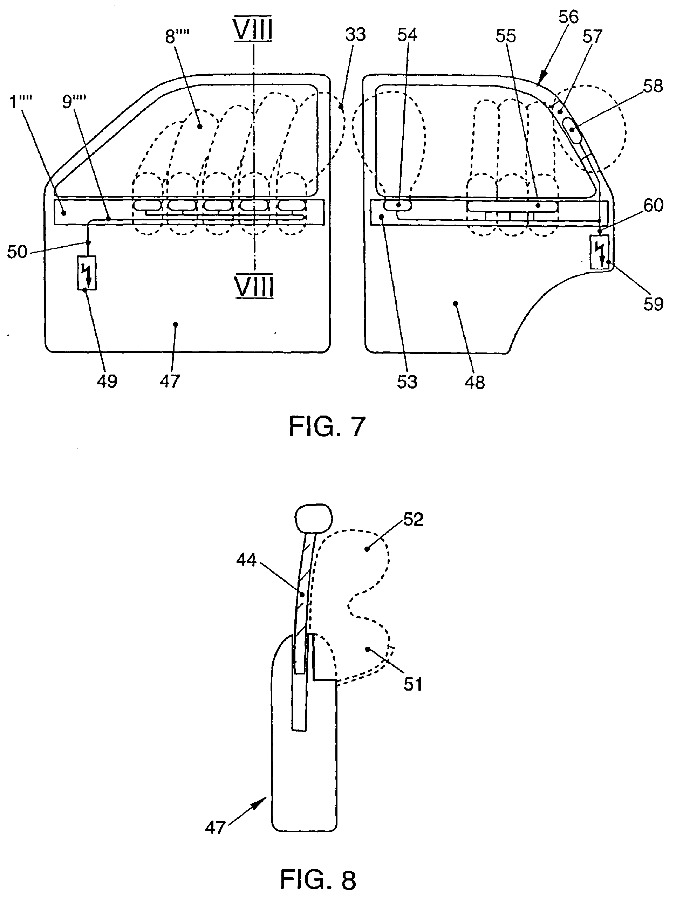

Figur 7 zeigt die Innenansicht auf eine Vordertür 47 und eine Hintertür 48. Innerhalb eines hier nicht weiter dargestellten Türinnenraums ist ein Gasgenerator 49 angeordnet, der über eine Zufuhrleitung 50 und einem dem Wandelement 1'''' zugeordneten Leitungskanal 9'''' mehrere hintereinander angeordnete Gaskissen, von denen hier nur eines aus Übersichtlichkeitsgründen mit 8'''' bezeichnet ist, mit Fülldruck beaufschlagt. Insbesondere das der B-Säule 33 zugewandte Gaskissen ist so ausgeführt, daß auch potentielle Aufschlagbereiche an diesem Fahrzeugabschnitt mit abgedeckt werden. Die Gaskissen sind so genäht, daß sich ein Thoraxschutzabschnitt 51 und ein Kopfschutzabschnitt 52 im aufgeblasenen Zustand ergibt (siehe Figur 8).

Für die Hintertür 48 ist ein Wandelement 53 gebildet worden, das in einem vorderen Bereich ein Frontgaskissen 54 und in einen der Rücksitzbank benachbarten Bereich einen Gaskissenschlauch 55 aufweist. Auf einem Türrahmen 56 ist ein als Wandelement fungierender Verkleidungsabschnitt 57 vorgesehen, dem ein Kopfschutzgaskissen 58 zugeordnet ist. Die Gaskissen 54, 55 und 58 sind gemeinsam über einen in der Hintertür 48 untergebrachten Gasgenerator 59 und ein Fluidleitungssystem 60 aufblasbar.

Das Frontgaskissen 54 ist hier so ausgeführt, daß es zumindest abschnittsweise, ggf. aber auch in Richtung nach vom über die B-Säule 33 hinweg, aufblasbar ist, um so insbesondere sehr weit hinten plazierten Insassen auf Vordersitzen bei einem Seitenaufprall wirkungsvollen Schutz bereitstellen zu können. Demgegenüber ist das Schlauchgaskissen 25 und das Kopfschutz-Gaskissen 58 dem auf einem Hintersitz untergebrachten Fahrzeuginsassen zugeordnet.

Die für die Hintertür dargestellten Verhältnisse können ebenso auf feststehende Seitenwände von Fahrzeugen übertragen werden. Anstelle einer Türbrüstung kann also beispielsweise ein Profilelement im Bereich einer Fensterbrüstung für die Applikation eines erfindungsgemäß hergerichteten Modulträger genutzt werden.

Über Ventilsteuerungen im Leitungskanal 9 bzw. durch gezielte Querschnittsdimensionierungen in den Abzweigen 10 oder im Bereich der den Gaskissen zugeordneten Anschlüsse 11 können besondere Füllungscharakteristika eingestellt werden. So ist bei der in Figur 7 dargestellten Konfiguration die Leitung 9'''' so ausgeführt, daß zunächst das der B-Säule 33 benachbarte Gaskissen 8'''' aufgeblasen wird. Es wird also eine Schutzwand von hinten ausgehend in Richtung nach vom aufgebaut. Auf diese Weise wird in Sekundenbruchteilen sofort ein wirksamer Kopfschutz hergestellt.

Die Unterbringung der Gasgeneratoren 49 und 59 kann auch an anderen als den in der Zeichnung dargestellten Bereichen der Türen vorgenommen werden.

Die erleichterte Montierbarkeit der vorstehend beschriebenen Airbageinrichtung ergibt sich nun dadurch, daß im Bereich der Gesamtfahrzeugmontage praktisch keinerlei Änderungen notwendig werden. Das dort tätige Personal erhält anstelle konventioneller Verkleidungselemente nun das gesamte Airbagmodul, das aber in der dem Montagepersonal bislang vertrauten Weise am Fahrzeug appliziert werden kann. Jeder Modulträger samt Einbauteile kann an einem von der Gesamtfahrzeugmontage entfernten Ort einbaufertig hergerichtet werden. Eine bereits laufende Fahrzeugserienfertigung muß hinsichtlich der Montageabläufe für den Einsatz der Erfindung also nicht geändert werden. Darüber hinaus kann die erfindungsgemäße Airbageinrichtung auch in Altfahrzeugen nachgerüstet werden, sofern diese bereits mit einem anderweitigen Airbagsystem (z. B. im Lenkrad oder in der Armaturentafel) ausgerüstet sind.

## Patentansprüche

1. Fahrzeug, insbesondere Kraftfahrzeug, mit einer Airbageinrichtung für Insassen eines Fahrzeugs mit wenigstens einem durch wenigstens einen Gasgenerator (20, 28, 49, 59) aufblasbaren Gaskissen (8, 22, 29, 54, 55, 58), das unter einem Wandelement eines Verkleidungsteils angeordnet ist, wobei:
a) das Gaskissen (8) im zusammengefalteten Zustand direkt oder über Anbindung an den Gasgenerator mittelbar an dem Wandelement (1') befestigt ist,
b) das als Formkörper ausgebildete Verkleidungselement einerseits und zumindest das wenigstens eine Gaskissen (8, 22, 29, 54, 55, 58) andererseits ein Vormontagemodul bilden,
c) das Vormontagemodul mit Arretiermitteln (3, 4; 38, 39) zur Befestigung am Fahrzeugaufbau und/oder an anderen Verkleidungsteilen versehen ist und
d) dem wandelement (1' - 1"") und/oder dem Gaskissen (8) ein Fluid- oder Treibmittelleitungsanschluss (11) zugeordnet ist, der mit einer durch den Gasgenerator (49, 59) füllbaren Zufuhrleitung (9, 50, 60) verbunden ist,
**dadurch gekennzeichnet,**
**dass** zumindest abschnittsweise die Zufuhrleitung (9) integraler Bestandteil des Wandelementes (1' - 1"") ist.

2. Fahrzeug nach Anspruch 1, **gekennzeichnet durch**:
a) das Wandelement ist im an einem Fahrzeugaufbau befestigten Zustand der Airbageinrichtung über eine stabile Anlenkung (41) befestigt und überdeckt in seiner Ruhelage das zusammengefaltete Gaskissen (8, 22, 29, 54, 55, 58),
b) zur gezielten Entfaltung des Gaskissens entlang einer Seitenscheibe (44) und/oder vertikalen Säule (33) wird das Wandelement (1'', 1''', 1'''') von dem sich entfaltenden Gaskissen (8", 8"', 8"") über die stabile Anlenkung in einen vorgegebenen Öffnungszustand bewegt.

3. Fahrzeug nach Anspruch 1 oder 2, **dadurch gekennzeichnet, dass** das Wandelement (1'- 1"") zur Erzeugung einer Ausblasöffnung durch einen in das Gaskissen (8) von dem Gasgenerator (20, 28, 49, 59) eingebrachten Fülldruck im Bereich einer Soll-Schwachstelle (16) zerstörbar oder von dem Fahrzeugaufbau zumindest teilweise lösbar ist.

4. Fahrzeug nach wenigstens einem der Ansprüche 1 bis 3, **dadurch gekennzeichnet, dass** im an einem Fahrzeugaufbau befestigten Zustand der Airbageinrichtung durch das Wandelement (1' - 1'''') und durch wenigstens einen Abschnitt des Fahrzeugaufbaus eine Gaskissenaufnahmekammer (2) gebildet ist.

5. Fahrzeug nach Anspruch 4, **dadurch gekennzeichnet, dass** im an einem Fahrzeugaufbau befestigten Zustand der Airbageinrichtung das Wandelement (1' - 1 "") Bestandteil eines einen Profilabschnitt der Fahrzeugkarosserie bedeckenden Verkleidungselementes ist.

6. Fahrzeug nach Anspruch 5; **dadurch gekennzeichnet, dass** im an einem Fahrzeugaufbau montierten Zustand der Airbageinrichtung das Wandelement (1' - 1"") zum Anschluss an eine vertikale Säule (33), eine Seitenwandbrüstung, ein Fensterschachtträger (45), eine Türbrüstung, ein diagonal verlaufendes Rahmen- bzw. Trägerelement oder ein Dachrahmen hergerichtet ist.

7. Fahrzeug nach einem der Ansprüche 1 bis 6, **dadurch gekennzeichnet, dass** das Wandelement (1'- 1'''') wenigstens ein bei Füllung des Gaskissens (8 - 8''') in einer Schließstellung verbleibendes Arretiermittel (39) als stabile Anlenkung und wenigstens ein zur Bereitstellung einer Klapp- oder Schwenkbewegung in den Lösezustand übergehendes Arretiermittel (38) aufweist.

8. Fahrzeug nach Anspruch 7, **dadurch gekennzeichnet, dass** das in den Lösezustand übergehende Arretiermittel durch wenigstens ein Clipselement (3, 38) gebildet ist, das im an einem Fahrzeugaufbau befestigten Zustand einen Halteflansch (5, 34) oder eine durch eine Rastöffnung zugängliche Haltewand des Fahrzeugaufbaus hintergreift.

9. Fahrzeug nach einem der Ansprüche 1 bis 8, **dadurch gekennzeichnet, dass** der wenigstens eine Gasgenerator (49, 59) im montierten Zustand der Airbageinrichtung in einem von dem Wandelement (1'- 1"") nicht oder nur zum Teil abgedeckten fahrzeugseitigen Hohlraum untergebracht und mit einem Anschluss für die Zufuhrleitung (9) verbunden ist.

10. Fahrzeug nach einem der Ansprüche 1 bis 9, **dadurch gekennzeichnet, dass** der Treibmittelleitungsanschluss in einem Bereich des Wandelementes (1') vorgesehen ist, bei dem im verbauten Zustand des Wandelementes (1') für wenigstens einen der Fahrzeuginsassen ein Kopfaufschlag gegeben ist.

11. Fahrzeug nach einem der Ansprüche 1 bis 10, **dadurch gekennzeichnet, dass** der Treibmittelleitüngsanschluss in einem Bereich vorgesehen ist, an dem im an einem Fahrzeugaufbau befestigten Zustand der Airbageinrichtung eine vertikal verlaufende Säule (33) auf einen Dachrahmen (7) stößt.

12. Fahrzeug nach einem der Ansprüche 1 bis 10, **dadurch gekennzeichnet, dass** der Treibmittelleitungsanschluss in einem Bereich vorgesehen ist, an dem im an einem Fahrzeugaufbau befestigten Zustand der Airbageinrichtung ein in etwa horizontal verlaufendes Profilelement auf eine vertikale Säule stößt.

13. Fahrzeug nach einem der Ansprüche 1 bis 12, **dadurch gekennzeichnet, dass** das Verkleidungselement als Modulträger für ein aus dem Gasgenerator (28) und dem Gaskissen (29) zusammengesetztes Modul ausgebildet ist.

14. Fahrzeug nach einem der Ansprüche 1 bis 13, **dadurch gekennzeichnet, dass** auf einer Rückseite des Wandelementes (1') Haltevorrichtungen für elektrische Leitungen vorgesehen sind.

15. Fahrzeug nach Anspruch 14, **dadurch gekennzeichnet, dass** Elemente eines elektrischen Leitungssystems (31) integraler Bestandteil des Wandelementes (1' - 1 ''') sind.

16. Fahrzeug nach einem der Ansprüche 1 bis 15, **dadurch gekennzeichnet, dass** in das als Kunststoffspritzteil ausgeführte Wandelement (1' -1"") wenigstens eine aufprallenergieabsorbierende Armierung eingeformt ist.

17. Fahrzeug nach Anspruch 16, **dadurch gekennzeichnet, dass** die Armierung mit Rastmitteln versehen ist, an denen ein Gaskissen (8, 22, 29, 54, 55, 58) und/oder ein Gasgenerator (20, 28, 49, 59)und/oder eine Zufuhrleitung (9) und/oder ein elektrisches Leitungssystem und/oder Fangbänder arretierbar ist oder sind.

18. Fahrzeug nach Anspruch 2, **dadurch gekennzeichnet, dass** die stabile Anlenkung durch wenigstens ein Schwenklager (41) gebildet ist.

19. Fahrzeug nach Anspruch 2, **dadurch gekennzeichnet, dass** die stabile Anlenkung durch einen nachgiebigen Bereich in dem Wandelement (1' - 1"") gebildet ist.

20. Fahrzeug nach Anspruch 2, **dadurch gekennzeichnet, dass** der Öffnungszustand durch wenigstens ein Fangband (45 a) vorgegeben ist.

21. Fahrzeug nach Anspruch 2 oder 20, **dadurch gekennzeichnet, dass** der Öffnungszustand durch wenigstens einen stabil ausgeführten Bereich dies Wandelementes (1" - 1"") vorgegeben ist, der bei Entfaltung des Gaskissens (8" - 8"") ortsfest bleibt.

## Claims

1. Vehicle, in particular motor vehicle, with an airbag unit for vehicle occupants, with at least one gas cushion (8, 22, 29, 54, 55, 58) which can be inflated by at least one gas generator (20, 28, 49, 59) and is arranged below a wall element of a covering part, wherein:
a) the gas cushion (8), in the collapsed state, is fastened to the wall element (1') directly or indirectly via a connection to the gas generator,
b) the covering element, which is designed as a shaped body, firstly, and the at least one gas cushion (8, 22, 29, 54, 55, 58), secondly, form a preassembly module,
c) the preassembly module is provided with locking means (3, 4; 38, 39) for fastening to the vehicle body and/or to other covering parts, and
d) the wall element (1'-1"") and/or the gas cushion (8) is/are assigned a fluid or propellant line connection (11) which is connected to a supply line (9, 50, 60) which can be filled by the gas generator (49, 59),
**characterized in that** the supply line (9), at least in some sections, is an integral part of the wall element (1'-1"").

2. Vehicle according to Claim 1, **characterized by**:
a) in the state of the airbag unit in which it is fastened to a vehicle body, the wall element is fastened via a stable articulation (41) and, in its rest position, covers the collapsed gas cushion (8, 22, 29, 54, 55, 58),
b) for the specific deployment of the gas cushion along a side window (44) and/or vertical pillar (33) the wall element (1", 1"', 1"") is moved by the deploying gas cushion (8", 8"', 8"") via the stable articulation into a predetermined opening state.

3. Vehicle according to Claim 1 or 2, **characterized in that**, in order to produce a blow-out opening, the wall element (1'-1"") can be destroyed in the region of a predetermined weak point (16) or can be at least partially released from the vehicle body by a filling pressure introduced into the gas cushion (8) by the gas generator (20, 28, 49, 59) .

4. Vehicle according to at least one of Claims 1 to 3, **characterized in that**, in the state of the airbag unit in which it is fastened to a vehicle body, a gas cushion receiving chamber (2) is formed by the wall element (1'-1"") and by at least one section of the vehicle body.

5. Vehicle according to Claim 4, **characterized in that**, in the state of the airbag unit in which it is fastened to a vehicle body, the wall element (1'-1"") is part of a covering element covering a profiled section of the vehicle bodywork.

6. Vehicle according to Claim 5, **characterized in that**, in the state of the airbag unit in which it is fitted to a vehicle body, the wall element (1'-1"") is arranged for connection to a vertical pillar (33), a side wall ledge, a window channel carrier (45), a door ledge, a diagonally running frame or support element or a roof frame.

7. Vehicle according to one of Claims 1 to 6, **characterized in that** the wall element (1'-1"") has at least one locking means (39), which remains in a closed position when the gas cushion (8-8"') is filled, as the stable articulation, and at least one locking means (38) which passes into the release state in order to provide a folding or pivoting movement.

8. Vehicle according to Claim 7, **characterized in that** the locking means which passes into the release state is formed by at least one clip element (3, 38) which, in the state in which it is fastened to a vehicle body, engages behind a retaining flange, (5, 34) or a retaining wall of the vehicle body, which retaining wall is accessible through a latching opening.

9. Vehicle according to one of Claims 1 to 8, **characterized in that**, in the fitted state of the airbag unit, the at least one gas generator (49, 59) is accommodated in a vehicle-side cavity which is not or is only partially covered by the wall element (1'-1" "), and is connected to a connection for the supply line (9).

10. Vehicle according to one of Claims 1 to 9, **characterized in that** the propellant line connection is provided in a region of the wall element (1'), in which, in the installed state of the wall element (1'), there is a head impact zone for at least one of the vehicle occupants.

11. Vehicle according to one of Claims 1 to 10, **characterized in that** the propellant line connection is provided in a region at which, in the state of the airbag unit in which it is fastened to a vehicle body, a vertically running pillar (33) butts against a roof frame (7).

12. Vehicle according to one of Claims 1 to 10, **characterized in that** the propellant line connection is provided in a region at which, in the state of the airbag unit in which it is fastened to a vehicle body, an approximately horizontally running profile element butts against a vertical pillar.

13. Vehicle according to one of Claims 1 to 12, **characterized in that** the covering element is designed as a module carrier for a module composed of the gas generator (28) and the gas cushion (29).

14. Vehicle according to one of Claims 1 to 13, **characterized in that** retaining devices for electric lines are provided on the rear side of the wall element (1').

15. Vehicle according to Claim 14, **characterized in that** elements of an electric line system (31) are an integral part of the wall element (1'-1"").

16. Vehicle according to one of Claims 1 to 15,
**characterized in that** at least one impact-energy-absorbing reinforcement is formed in the wall element (1'-1"") which is designed as an injection-moulded plastic part.

17. Vehicle according to Claim 16, **characterized in that** the reinforcement is provided with latching means to which a gas cushion (8, 22, 29, 54, 55, 58) and/or a gas generator (20, 28, 49, 59) and/or a supply line (9) and/or an electric line system and/or catch straps can be locked.

18. Vehicle according to Claim 2, **characterized in that** the stable articulation is formed by at least one pivot bearing (41).

19. Vehicle according to Claim 2, **characterized in that** the stable articulation is formed by a flexible region in the wall element (1'-1"").

20. Vehicle according to Claim 2, **characterized in that** the opening state is predetermined by at least one catch strap (45a).

21. Vehicle according to Claim 2 or 20, **characterized in that** the opening state is predetermined by at least one stably designed region of the wall element (1"-1""), which region remains fixed in position when the gas cushion (8"-8"") deploys.

## Revendications

1. Véhicule, en particulier véhicule automobile, comprenant un dispositif d'airbag pour des occupants d'un véhicule, comprenant au moins un coussin de gaz (8 ; 22, 29, 54, 55, 58) pouvant être gonflé par au moins un générateur de gaz (20, 28, 49, 59) et qui est disposé sous un élément de paroi d'une partie d'habillage,
a) le coussin de gaz (8) étant fixé dans l'état replié directement ou indirectement par le biais d'une liaison au générateur de gaz, à l'élément de paroi (1'),
b) l'élément d'habillage réalisé en tant que corps moulé d'une part et au moins l'au moins un coussin de gaz (8 ; 22, 29, 54, 55, 58) d'autre part formant un module de prémontage,
c) le module de prémontage étant pourvu de moyens de blocage (3, 4 ; 38, 39) pour la fixation à la caisse du véhicule et/ou sur d'autres parties d'habillage et
d) un raccord de conduite de fluide ou d'agent propulseur (11) est associé à l'élément de paroi (1'-1"") et/ou au coussin de gaz (8), et est connecté à une conduite d'amenée (9, 50, 60) pouvant être remplie par le générateur de gaz (49, 59),
**caractérisé en ce que** la conduite d'amenée (9) fait au moins partiellement partie intégrante de l'élément de paroi (1'-1"").

2. Véhicule selon la revendication 1, **caractérisé en ce que**:
a) l'élément de paroi est fixé dans l'état du dispositif d'airbag fixé à la caisse du véhicule, par le biais d'une liaison stable (41) et recouvre dans sa position de repos le coussin de gaz replié (8 ; 22, 29, 54, 55, 58),
b) pour déplier de manière ciblée le coussin de gaz le long d'un disque latéral (44) et/ou d'une colonne verticale (33), l'élément de paroi (1", 1"', 1"") est déplacé depuis le coussin de gaz se dépliant (8", 8"', 8"") par le biais de la liaison stable dans un état d'ouverture prédéterminé.

3. Véhicule selon la revendication 1 ou 2, **caractérisé en ce que** l'élément de paroi (1"-1"") peut être détruit pour produire une ouverture de gonflage par une pression de remplissage appliquée dans le coussin de gaz (8) par le générateur de gaz (20, 28, 49, 59) dans la région d'un point d'affaiblissement (16) ou peut être au moins partiellement détaché de la caisse du véhicule.

4. Véhicule selon au moins l'une quelconque des revendications 1 à 3, **caractérisé en ce que** dans l'état du dispositif d'airbag fixé à la caisse du véhicule, une chambre de logement de coussin de gaz (2) est formée par l'élément de paroi (1"-1"") et par au moins une portion de la caisse du véhicule.

5. Véhicule selon la revendication 4, **caractérisé en ce que** dans l'état du dispositif d'airbag fixé à la caisse du véhicule, l'élément de paroi (1'-1"") fait partie d'un élément d'habillage recouvrant une portion profilée de la carrosserie du véhicule.

6. Véhicule selon la revendication 5, **caractérisé en ce que** dans l'état du dispositif d'airbag monté à la caisse du véhicule, l'élément de paroi (1'-1"") est prévu pour se raccorder à une colonne verticale (33), un rebord de paroi latérale, un support de gaine de fenêtre (45), un appui de porte, un élément de cadre ou de support s'étendant en diagonale ou un cadre de toit.

7. Véhicule selon l'une quelconque des revendications 1 à 6, **caractérisé en ce que** l'élément de paroi (1'-1"") présente au moins un moyen de blocage (39) restant dans une position de fermeture lors du remplissage du coussin de gaz (8-8"'), servant de liaison stable et au moins un moyen de blocage (38) passant dans l'état de libération pour permettre un mouvement de rabattement ou de pivotement.

8. Véhicule selon la revendication 7, **caractérisé en ce que** le moyen de blocage passant dans l'état de libération est formé par au moins un élément de clipsage (3, 38) qui vient en prise par l'arrière dans l'état fixé à la caisse du véhicule avec une bride de fixation (5, 34) ou une paroi de fixation de la caisse du véhicule accessible par une ouverture d'encliquetage.

9. Véhicule selon l'une quelconque des revendications 1 à 8, **caractérisé en ce que** l'au moins un générateur de gaz (49, 59) est installé, dans l'état monté du dispositif d'airbag, dans une cavité du côté du véhicule, non recouverte ou recouverte seulement en partie par l'élément de paroi (1'-1"'), et est connecté à un raccord pour la conduite d'amenée (9).

10. Véhicule selon l'une quelconque des revendications 1 à 9, **caractérisé en ce que** le raccord de la conduite d'agent propulseur est prévu dans une région de l'élément de paroi (1') dans laquelle, dans l'état assemblé de l'élément de paroi (1'), il est prévu au moins pour l'un des occupants du véhicule, un impact pour la tête.

11. Véhicule selon l'une quelconque des revendications 1 à 10, **caractérisé en ce que** le raccord de conduite d'agent propulseur est prévu dans une région à laquelle s'aboute, dans l'état du dispositif d'airbag fixé à la caisse du véhicule, une colonne (33) s'étendant verticalement sur un cadre de toit (7).

12. Véhicule selon l'une quelconque des revendications 1 à 10, **caractérisé en ce que** le raccord de conduite d'agent propulseur est prévu dans une région à laquelle s'aboute, dans l'état du dispositif d'airbag fixé à la caisse du véhicule, un élément profilé s'étendant approximativement horizontalement sur une colonne verticale.

13. Véhicule selon l'une quelconque des revendications 1 à 12, **caractérisé en ce que** l'élément d'habillage est réalisé sous forme de support de module pour un module constitué du générateur de gaz (28) et du coussin de gaz (29).

14. Véhicule selon l'une quelconque des revendications 1 à 13, **caractérisé en ce que** l'on prévoit sur un côté arrière de l'élément de paroi (1') des dispositifs de fixation pour des conduites électriques.

15. Véhicule selon la revendication 14, **caractérisé en ce que** des éléments d'un système de conduite électrique (31) font partie intégrante de l'élément de paroi (1'-1"").

16. Véhicule selon l'une quelconque des revendications 1 à 15, **caractérisé en ce qu'**au moins un renforcement absorbant l'énergie de collision est façonné dans l'élément de paroi (1'-1"") réalisé sous forme de pièce moulée par injection de plastique.

17. Véhicule selon la revendication 16, **caractérisé en ce que** le renforcement est pourvu de moyens d'encliquetage sur lesquels un coussin de gaz (8 ; 22, 29, 54, 55, 58) et/ou un générateur de gaz (20, 28, 49, 59) et/ou une conduite d'amenée (9) et/ou un système de conduite électrique et/ou des bandes de retenue peut ou peuvent être bloqués.

18. Véhicule selon la revendication 2, **caractérisé en ce que** la liaison stable est formée par au moins un palier pivotant (41).

19. Véhicule selon la revendication 2, **caractérisé en ce que** la liaison stable est formée par une région flexible dans l'élément de paroi (1'-1"").

20. Véhicule selon la revendication 2, **caractérisé en ce que** l'état d'ouverture est prédéfini par au moins une bande de retenue (45a).

21. Véhicule selon la revendication 2 ou 20,
**caractérisé en ce que** l'état d'ouverture est prédéfini par au moins une région de l'élément de paroi (1"-1"") réalisée sous forme stable, qui reste fixée en place lors du dépliement du coussin de gaz (8"-8"").
